(19) **Europäisches Patentamt**
**European Patent Office**
**Office européen des brevets**

(11) **EP 1 195 075 B1**

(12) **EUROPEAN PATENT SPECIFICATION**

(45) Date of publication and mention
of the grant of the patent:
**05.09.2007 Bulletin 2007/36**

(51) Int Cl.:
***H04Q 11/04*** *(2006.01)*

(21) Application number: **00946636.8**

(22) Date of filing: **22.06.2000**

(86) International application number:
**PCT/SE2000/001341**

(87) International publication number:
**WO 2001/001729 (04.01.2001 Gazette 2001/01)**

(54) **IMPROVEMENTS IN, OR RELATING TO, TELECOMMUNICATIONS SERVICE PROVISION**

VERBESSERUNGEN VON ODER BEZÜGLICH EINER
TELEKOMMUNIKATIONSDIENSTEINRICHTUNG

AMELIORATIONS EN MATIERE DE PRESTATION DE SERVICES DE TELECOMMUNICATION

(84) Designated Contracting States:
**AT BE CH CY DE DK ES FI FR GB GR IE IT LI LU MC NL PT SE**
Designated Extension States:
**LT LV**

(30) Priority: **24.06.1999 SE 9902421**

(43) Date of publication of application:
**10.04.2002 Bulletin 2002/15**

(73) Proprietor: **TELIA AB**
**123 86 Farsta (SE)**

(72) Inventors:
• **AHLARD, David**
**S-127 37 Skärholmen (SE)**
• **BERGKVIST, Joakim**
**S-170 73 Solna (SE)**
• **CSELENYI, Istvan**
**S-136 63 Haninge (SE)**

(74) Representative: **Hopfgarten, Nils et al**
**L.A. Groth & Co. KB**
**P.O. Box 6107**
**102 32 Stockholm (SE)**

(56) References cited:
• **JEROME TASSEL ET AL.: 'An end to end price-based QoS control component using reflective Java' 4TH COST 237 WORKSHOP December 1997, (LISBON), XP002907372**
• **ERRIN W. FULP ET AL.: 'Paying for QoS: An optimal distributed algorithm for pricing network resources' PROCEEDINGS OF THE IWQOS'98 WORKSHOP 1998, (NAPPA VALLEY, CA), XP010280482**
• **GABRIEL DERMLER ET AL.: 'A negotiation and resource reservation protocol (NRP) for configurable multimedia applications' IEEE PROCEEDINGS OF MULTIMEDIA'96 1996, XP002907359**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The present invention relates to a telecommunications system adapted to facilitate control of QoS (Quality of Service) by a telecommunications subscriber, subscriber apparatus having a QoSUI (Quality of Service User Interface), a client server having a QoSUI and a method for facilitating control of QoS by a telecommunications subscriber.

When end users wish to specify the QoS in the network, there is no easy way to map the user's demand for QoS onto the specifications in the network nodes. The user wants to choose a certain QoS for a specified data flow, and send an instruction to the network specifying this QoS. The underlying functionality of such an arrangement should, of course, be hidden from the user.

JÉRÕME TASSEL ET AL.: "An End to End Price-Based QoS Control Component Using Reflective Java" 4th COST 237 WORKSHOP December 1997, Lis-boa, pages 18-32, XP002907372, describes a model allowing easy, flexible addition of quality of service (QoS) control to Java Internet applications. The QoS is expressed in terms of network and host resources, the network QoS being controlled with RSVP. A user budget agent is introduced, which controls the budget of a user according to some rules predefined by the user. The rules include the time constraints on reservation establishment and restrictions on maximum spending per stream and per application. The QoS manager requests a quote for the amount of resources it wants to reserve and sends this quote to the user budget agent which then can authorise or refuse is, according to the user spending rules.

ERRIN W. PULP ET AL.: "Paying for QoS: An Optimal Distributed Algorithm for Pricing Network Resources" THE PROCEEDINGS OF THE IWQoS 98 WORKSHOP May 1998, Nappa Valley, CA, pages 75-84, XP010280482, discloses a distributed microeconomic flow control technique, that models the network as competitive markets. In these markets switches price their link bandwidth based on supply and demand, and users purchase bandwidth so as to maximize their individual quality of service (QoS).

GABRIEL DERMLER ET AL.: "A Negotiation and Resource Reservation Protocol (NRP) for Configurable Multimedia Applications" IEEE PROCEEDINGS OF MULTIMEDIA '96, 1996, pages 113-115, XP002907359 describes an abstract model for describing multimedia applications, and based on this model application level negotiation is positioned inside a QoS architecture distinguishing QoS levels for clients, application and transport system. Further, an NRP protocol and its applicability to applications are disclosed.

The present invention lets a user control the QoS of a service, get information about the current status of the network, and observe the change in quality in the application being run.

Determining which application's traffic is represented by a given data flow cannot easily be achieved. Experienced users may use the standard program "netstat" (a "standard", in this context, means a component which can be found on almost every networking platform currently used) to find out which TCP/UDP connections are currently active on the client server, and map them manually to a specific application. In the present invention, this mapping is made by the Quality of Service User Interface (QoSUI), either by presenting a user-friendly list of applications, or just a "netstat"-like presentation to the user. It is vitally important that the user interface is simple to use. A user should be able to find what he/she is looking for from a quick glance at the list of data flows, be it a FTP session, a video stream, or any other application that can be mapped to a data flow.

Even if a user is able to identify a flow for which he/she desires to set a specific QoS, there is currently no mechanism for doing so. The user should be able to select a specific flow in the User Interface, set QoS parameters, such as desired bandwidth and protocol-specific parameters, and send them to the network in an easy way.

Whenever any kind of QoS configuration is set up in the network, the user should be able to check the flows that currently have resources bound to them. Information about the current settings for QoS should be updated quickly and regularly, to provide the user with the current status.

If the network architecture supports charging, real-time charging information can be presented to the user through the QoSUI. This may include information on the current cost for specific applications, as well as a total of all charges. Some service providers, or network operators, might regard a facility which presents a subscriber with charging and billing information in real-time as bad from a marketing point of view. This particular feature of the present invention is, therefore, optional.

QoS for a specific application, or data flow, is generally achieved by altering the application software itself, making it OoS-aware. Using a general QoS user interface makes resource reservations easier, and by collecting all information about the current reservations, the user gets a better overview of the state of the network.

According to a first aspect of the present invention, there is provided a telecommunications system, adapted to operate as a platform for the provision of multi-media data services, and including a transmission network, said telecommunications system having a QoSUI adapted to map applications traffic onto specified data flows and to present the mapping to a user via a graphical user interface , where the system comprises the features defined in the characterising portion of claim 1.

The mapping of applications traffic onto data flows may be presented as a list of applications.

Said QoS parameters may include desired bandwidth and protocol specific parameters.

Said QoSUI may be adapted to enable a user to determine which data flows have resources bound to them.

Said QoSUI may be adapted to provide a user with information on costs associated with a specific application and total costs incurred by a current session.

Said DoSUI may be adapted to communicate with a client server's underlying structure to produce a list of data flows to which QoS resources can be bound, said QoSUI may be adapted to enable a user to select a QoS to be applied to a data flow to which QoS resources can be bound and intelligent decisions may be referred to a client software module.

Said QoSUI may be adapted to communicate with a client server's underlying structure to produce a list of data flows to which QoS resources can be bound, said QoSUI may be adapted to enable a user to select a QoS to be applied to a data flow to which QoS resources can be bound and intelligent decisions may be referred to a user.

Said QoSUI may be adapted to present available data flows of a client server to a user as either a mapping to a corresponding application, or as a specific TCP/UDP flow, together with a current cost, bound resource and available resource status.

Said QoSUI may include a graphical interface adapted to display at least some of the following information:

- connection type;

- remote host identity;

- remote port;

- local port;

- allocated resource; and

- remote IP.

Said graphical interface may include a soft button to enable a user to update information displayed by said graphical interface, soft-controls may be provided to enable a user to adjust bandwidth requirements and said graphical interface may be adapted to display a current connection status.

Said graphical interface may be adapted to display a table listing information on current reservation status for a plurality of data flows each of which is associated with one, or more, applications.

According to a second aspect of the present invention, there is provided a subscriber terminal, for use with a telecommunications system, as set forth in any preceding paragraph said subscriber terminal having a QoSUI adapted to map applications traffic onto specified data flows and to present the mapping to a user via a graphical user interface , which terminal comprises the features defined in the characterising portion of claim 11.

According to a third aspect of the present invention, there is provided a client server, for use with a telecommunications system, as set forth in any preceding paragraph, said client server having a QoSUI adapted to map applications traffic onto specified data flows and to present the mapping to a user via a graphical user interface, which client server comprises the features defined in the characterising portion of claim 12.

The mapping of applications traffic onto data flows may be presented as a list of applications.

Said QoS parameters may include desired bandwidth and protocol specific parameters.

Said QoSUI may be adapted to enable a user to determine which data flows have resources bound to them.

Said QoSUI may be adapted to provide a user with information on costs associated with a specific application and total costs incurred by a current session.

Said QoSUI may be adapted to communicate with a client server's underlying structure to produce a list of data flows to which QoS resources can be bound, said QoSUI may be adapted to enable a user to select a QoS to be applied to a data flow to which QoS resources can be bound and intelligent decisions may be referred to a client software module.

Said QoSUI may be adapted to communicate with a client server's underlying structure to produce a list of data flows to which QoS resources can be bound, said QoSUI may be adapted to enable a user to select a QoS to be applied to a data flow to which QoS resources can be bound and intelligent decisions may be referred to a user.

Said QoSUI may be adapted to present available data flows of a client server to a user as either a mapping to a corresponding application, or as a specific TCP/UDP flow, together with a current cost, bound resource and available resource status.

Said QoSUI may include a graphical interface adapted to display at least some of the following information:

- connection type;

- remote host identity;

- remote port;

- local port;

- allocated resource; and

- remote IP.

Said graphical interface may include a soft button to enable a user to update information displayed by said graphical interface, soft-controls may be provided to enable a user to adjust bandwidth requirements and said graphical interface may be adapted to display a current connection status.

Said graphical interface may be adapted to display a table listing information on current reservation status for a plurality of data flows each of which is associated with one, or more, applications.

According to a fourth aspect of the present invention, there is provided a method of operating a telecommunications system, adapted to operate as a platform for the provision of multimedia data services, in which a mapping of applications traffic onto specified data flows is presented to a user via a QoSUI , which method comprises the features defined in the characterising portion of claim 22.

Data flows may be mapped onto applications traffic and the mapping may be presented to a user as a list of applications.

Said OoS parameters may include desired bandwidth and protocol specific parameters.

Said QoSUI may enable a user to determine which data flows have resources bound to them.

Said OoSUI may provide a user with information on costs associated with a specific application and total costs incurred by a current session.

Said QoSUI may communicate with a client server's underlying structure to produce a list of data flows to which QoS resources can be bound, said QoSUI may enable a user to select a QoS to be applied to a data flow to which QoS resources can be bound and intelligent decisions may be referred to a client software module.

Said QoSUI may communicate with a client server's underlying structure to produce a list of data flows to which QoS resources can be bound, said QoSUI may enable a user to select a QoS to be applied to a data flow to which QoS resources can be bound and intelligent decisions may be referred to a user.

Said QoSUI may present available data flows of a client server to a user as either a mapping to a corresponding application, or as a specific TCP/UDP flow, together with a current cost, bound resource and available resource status.

At least some of the following information may be displayed:

- connection type;

- remote host identity;

- remote port;

- local port;

- allocated resource; and

- remote IP.

Embodiments of the invention will now be described, by way of example, with reference to the accompanying drawings, in which:

Figure 1 illustrates the information flows in a QoS aware environment.

Figure 2 illustrates an example of a QoS User Interface according to the present invention.

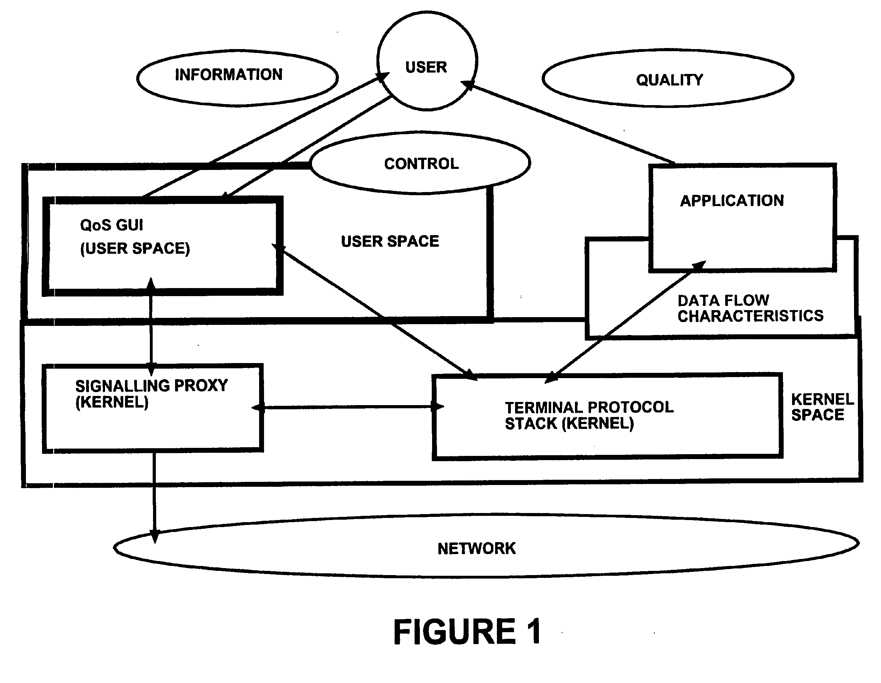

Referring now to Figure 1 of the accompanying drawings, a user is shown in relation to a user interface, an application running on a client server and the telecommunications network. The data flows from and to the user include information supplied to the user, user control data sent by the user to a client server, and application performance data. Information received by the user is derived from the QoS GUI(Graphical User Interface), via a signalling proxy, terminal protocol stack and application. Control of the system and the network, in terms of available resource, to the extent this is possible, is exerted via the QoS GUI and signalling proxy. Control of the application operates via the OoS GUI and terminal protocol stack.

As previously observed, when end user applications are dependent on QoS in the network, there is no easy way to map a user's requirements, in respect of QoS, to specifications in the network nodes. The user needs to be able to choose a given QoS for a specified data flow, and send it to the network. The underlying functionality should, ideally, be hidden from the user so that operation of the GoSUI is user friendly.

The QoSUI maps an application's traffic onto specified data flows either by presenting a user-friendly list of applications, or a "netstat"-like presentation, to the user. A quick glance at the list of data flows enables the user to find what he/she is looking for, e.g. a FTP session, a video stream, or some other application that can be mapped to a data flow.

The present invention enables a user to select a specific flow in the User Interface, set QoS parameters, such as desired bandwidth and protocol-specific parameters, and send them to the network.

The present invention enables a user to check the data flows that currently have resources bound to them. Information about the current settings for QoS are updated quickly and regularly, to provide the user with the current QoS status.

If the network architecture supports charging, real-time charging information can be presented to the user through the QoSUI. This may include information on the current cost for specific applications, together with a total charge.

Quality of Service for a specific application, or data flow, is generally achieved by altering the software itself, making it QoS-aware. Using a general QoS user interface makes resource reservations easier, and by collecting all information about the current reservations, the user gets a better overview of the state of the network.

The present invention is a QoSUI which solves the aforementioned problems. It communicates with the underlying structures of the client's server, produces a list of flows to which QoS resources can be bound, and lets the user choose the type of QoS that should be applied to each data flow. The QoSUI then sends these QoS requests to the network, and presents the result to the user. Intelligent decisions, such as downgrading of a denied request, can either be made in an underlying client software module, or can be presented to the user, who will then make the decision based upon his/her objective.

The QoSUI, as the user interface between the user and the network QoS architecture, has to perform two tasks, namely:

1. The QoSUI presents the actual status and available data flows of the client server, to the user. Data flows are presented to the user in an intuitive way, either as a mapping to the corresponding application, or to the specific TCP/UDP flow. The status of current costs, bound resources and available resources, are easily accessible to the user.

2. The QoSUI retrieves the wishes and control actions of the user relating to the parameters of the QoS network. This is a translation mechanism where abstract user-friendly terms are translated to the more complex QoS parameters of the network. Responses from the network are also translated into easy-to-understand messages that can be directed to the user.

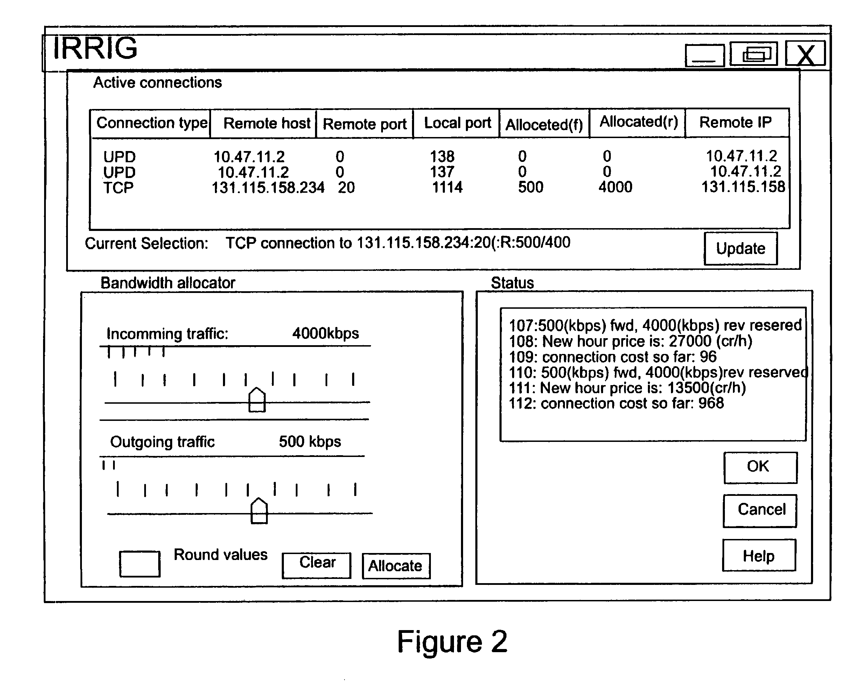

The VDU appearance of the OoSUI, used in the present invention, is illustrated in Figure 2. As can be seen from the drawing the user is presented with a standard Windows format for the QoSUI. Active connections have the following information displayed on screen:

- connection type, e.g. UDP, TCP;

- remote host identity;

- remote port;

- local port;

- allocated resource, e.g. transmit (f) and receive (r) bandwidth; and

- remote IP.

A soft button is provided to enable a user to update this information.

Soft-controls are provided (sliders) to allow the user to adjust his/her bandwidth requirements, together with a "round" box, and soft buttons for clear and allocate.

The current connection status is also shown, including current charge rates and the total session cost. The status indicator is provided with soft buttons for "OK", "Cancel" and "Help".

It can thus be seen that the QoSUI, as presented to the user, is simple, easy to use, and employs a user friendly format with which the majority of users will be familiar.

Since each application, or data flow, has it's own resource demand, resources can be bound for a multitude of flows simultaneously. Each of these flows shows up in a table with information about its current reservation status. For example, a 10 Mb/s link can be divided up between sessions, so that the FTP session gets a 5 Mb/s link rate, the RealVideo session gets a 200 Kb/s and the remaining applications share the remaining 5 Mb/s in an old-fashioned best effort style. The exact style and parameters depend, of course, on the underlying QoS architecture.

The present invention can be used in any system where bandwidth, or any other resource, can be reserved in a network. There are, however, two requirements that the system must fulfill, namely:

1. There has to be some kind of signalling protocol that the QoSUI of the present invention can use for signalling into the network. For ease of migration, there should also be an API, or similar structure, for the QoS architecture, which can then be used by the user interface.

2. There must be a mechanism for the user interface to obtain a list of data flows, or sessions, for the machine on which it is running. The more information that is available to the user interface, the easier it will be for the user to make decisions regarding the network QoS.

How to fulfill these requirements will be readily apparent, to the man skilled in the art. However, details of a signalling protocol, the subject of our co-pending patent application (Kgp 22/99), are set out below.

Multimedia applications with distinct quality parameters, e.g. video frame rate, picture resolution, or audio sampling rate, have a certain set of possible resource values that they require from the network. The set of these resource values can be expressed in a Resource Vector. Moreover, users have different opinions about the different quality settings and assign different price thresholds to each resulting in a Price Vector. These two kinds of information can be combined in a Downgrade Vector, which can be carried in the reservation message (e.g. RSVP/RESV or IRMA/RING). Routers, or ATM switches, can utilise the downgrade vector for intelligent resource reservation.

Multimedia applications usually have several parameters which influence the amount of network resource, e.g. bandwidth, or multiplexing buffer size, they require for a given QoS. For instance, by altering the video coding parameters of a scalable MPEG application, its bandwidth requirement scales from 2.7, 3.085, 3.6, 4.32, 5.4, 7.2 up to 10.8 Mbps, see CAMVision-2 7615, User Guide, Litton Network Access Systems, Inc., October 1998. For describing the general case, the following terminology can be used:

- the number of independent quality parameters of the multimedia application is denoted by N;

- the number of values which can be taken by the nth parameter is denoted by $x_n$, where n=1,2...N;

- the number of independent network resource types, e.g. bandwidth, token bucket size, route, priority, ..., which are demanded by the application is denoted by K; and

- the set of possible resource values for the kth resource type, given in a set is denoted by

$$\Phi_k = \{r_{k,1}, r_{k,2}, \ldots r_{k,L_k}\} \qquad k = 1,2\ldots K$$

where $L_k$ denotes the number of elements in the $i^{th}$ resource set, i.e. the number of combinations of every parameter influencing how much the application requires from the $k^{th}$ resource type and $L_k$ is given by:

$$L_k = \prod_{i=1}^{N} x_i \qquad k = 1,2\ldots K$$

The elements of each Resource Vector can be sorted in descending order yielding K Resource Vectors:

$$r_k = \left\lfloor r_{k,1}, r_{k,2}, \dots r_{k,L_k} \right\rfloor \quad r_i^k \leq r_j^k \Leftrightarrow i > j, \quad i, j = 1,2,\dots L_k; \quad k = 1,2,\dots K$$

This represents the special information that can be determined in accordance with the capabilities of the multimedia application. It should be noted that some combinations of the N parameters result in the same resource requirement, thus neighbouring elements of a Resource Vector can be equal.

The second task is to describe how much the user prefers the different application performances which result from different parameter settings. The simplest way to achieve this task is to establish a vector describing the maximum price that the user is prepared to pay for the different settings of the parameters. Price is simply considered as a type of metric for ranking purposes. In this context • price • relates to a users preference and does not represent an absolute value and has nothing to do with real charge, cost, or price. If the user does not want to accept a certain parameter combination, he may give 0 as a threshold, in other words he states that he does not wish to pay anything for the quality resulting from this setting. There is a Price Vector for each resource type, namely:

$$p_k = \left\lfloor p_{k,1}, p_{k,2}, \dots p_{k,L_k} \right\rfloor \quad p_{k,i} \in \{0,1,\dots P\}, \quad i = 1,2\dots L_k \quad k = 1,2,\dots K$$

where P denotes the maximum 'price' in the system (e.g. 65535 or 255).

Default 'prices' can be determined from user trials and can be individually adjusted for each user.

The information about the application and user behaviour, i.e. the Resource and Price Vectors, can be merged into the Downgrade Vector. This vector specifies the resource amounts which the application supports and the user is ready to accept, in a descending order, and can be expressed as:

$$d_k = \left\lfloor d_{k,1}, d_{k,2}, \dots d_{k,J_k} \right\rfloor \quad d_{k,i} \in \Phi_k \quad i = 1,2,\dots J_k; \quad k = 1,2\dots K$$

where $J_k$ denotes the number of elements in the Downgrade Vector belonging to the $k^{th}$ resource type. This can be equal, or less than, $L_k$, because all resource values which are not unique, or for which the price is zero or not unique, may be omitted from the Downgrade Vector. It should be noted that the price is not unique if the user does not perceive any difference in the application quality when a quality parameter is changed. Therefore, different parameter combinations, i.e. resource values, may be equally preferred, (priced), by the user.

The Downgrade Vector, $d_k$, expresses the information that the network nodes consider during the reservation of the $k^{th}$ resource.

The Downgrade Vector can be calculated in many ways, including:

- by the terminal sending the reservation request;

- at the policy enforcement point, e.g. access routers; and

- by the policy server using the Resource and Price Vectors stored in the policy database.

The three scenarios referred to above will now be described.

Consider the use of an intelligent terminal. In this scenario, the terminal has the Resource and Price Vectors. Both can be retrieved from a configuration file, or from the policy server, or can be directly requested from the user. The Downgrade Vector can be calculated for each application demanding QoS in advance, or just before sending the reservation message.

In the case of policy enforcement in the access node, the user requesting resource reservation is first authenticated to the access node, i.e. the user starts a user session. The access node can look up the Price Vector belonging to the identified user in its user database, or that of the ISP. After authentication, the user specifies the service session by giving some reference to the service, the other parties and the required quality. The access node uses this information to find the right policy for the user and the service, e.g. by contacting the policy server. This policy information contains the proper Price Vector, or at least a part of it, if the user is not allowed to take all resource values. The access node can then calculate the Downgrade Vector and initiate the reservation by sending the Downgrade Vector in a reservation message (e.g. IRMA/RING).

In the case of a static handling policy, the policy server stores precalculated Downgrade Vectors for each application and user, or application group and user group. The host, or the access node, retrieves these preexisting Downgrade Vectors before initiating a reservation.

The Downgrade Vector can be built into any resource reservation protocol, which handles explicit resource demands, e.g. ATMF/UNI, ITU/Q.2931, IETF/RSVP and IRMA/RING. The network nodes are then able to perform downgrading based on the Downgrade Vector.

The Resource and Price Vectors can be built into policy servers, which store the relationships among users - applications - and network policy. Instead of a simple high/low priority mapping, a complete Preference Vector can be stored in this table. The policy can be obtained by the policy enforcement point, or the sending host, and merged together into a Downgrade Vector.

The advantages of using the Downgrade Vector, as outlined above, include:

- fewer connection setup trials yielding:

  - shorter and fixed connection setup time;

  - less demand for temporarily allocated resources, leading to a reduced probability of call blocking; and

  - fewer signalling messages per connection setup;

- dynamic policy handling; and

- more useful and informative network policies, i.e. not only high, medium, low priority.

Known signalling protocols for resource reservation specify only one, or two, bandwidth values, while the downgrade vector describes the full range of possible resource amounts for several resource types which can be taken by the application and which are preferred by the user.

The present invention has particular application to the IRMA (Intelligent Resource Management Architecture) project, an ongoing internal project conducted by Telia Research. A new, hop-by-hop resource reservation protocol, called RING, has been implemented in the IRMA Router prototype. The current prototype will be extended by:

- the use of a QoS User Interface on the user's terminal which can connect to the policy server, retrieve the Resource and Price Vectors and calculate the Downgrade Vector for the applications for which the user wants to reserve resources;

- the RING reservation message being extended with a field carrying the Downgrade Vector; and

- RING-aware nodes performing downgrading using the Downgrade Vector.

Protocol-specific variables can either be dynamically configured, or hidden beneath a user friendly interface. Some resource reservation protocols may need to be adapted to take full advantage of the user interface. But the fundamental structure of the system is more or less system-independent. This means that the invention can be used in most modem operating systems, including Windows, Linux, Sun Solaris, Amiga OS etc. Most IP based application that benefit from reserved resources can be used, such as FTP, video conferences, streaming video, network multiplayer games etc.

The present invention can be used for group access for residential users, for ISDN users, modem users and mobile users, who might want to easily set different resources for different applications because of limited network resources.

The present invention presents network resources to the user in an understandable and easy way. The resources of each flow, or application, can easily be examined and changed.

Multiple resource reservation protocols share the same common interface. Changes of resources in the network are immediately shown as a change in the interface. Instant feedback of charging information for every session can be given to the user.

The proposed QoSUI is a unique solution as the graphical user interface of a resource reservation system, which represents and configures network resources. Previous attempts at handling network resources have been hard-coded into each specific application, giving no overview of the resources being used by different applications.

A prototype of the present invention has been developed by Telia, where a proprietary network resource reservation protocol (RING) was used to allocate resources to the flows specified on the QoSUI. In the prototype, IP flows are presented to the user, who can then select flows and manipulate their resources. It gives an overview of what resources are bound to what flows, and shows basic billing information to the user when a flow is double- clicked. The prototype is fully functional, and solves all of the aforementioned problems.

It should be immediately apparent, to those skilled in the art, how to produce a more modular version of the QoSUI of the present invention, where the underlying structures of the network resource reservation procedures can be completely proprietary. Making the QoSUI work with standard resource reservation signalling protocols such as RSVP will also improve the power of this invention.

**Claims**

1. A telecommunications system, adapted to operate as a platform for the provision of multi-media data services, and including a transmission network, said telecommunications system having a QoSUI adapted to map applications traffic onto specified data flows and to present the mapping to a user via a graphical user interface, **characterised in that** said QoSUI is adapted to enable a user to select a desired data flow and set QoS parameters therefor, said QoS parameters including desired bandwidth and protocol specific parameters, that transmission means are provided adapted to transmit QoS parameters selected by a user to said transmission network that said QoSUI is adapted to retrieve a user's control actions, that means are provided to translate said control actions into QoS parameters of the transmission network and that means are provided to translate responses from said transmission network into user friendly messages addressed to a user.

2. A telecommunications system, as claimed in claim 1, **characterised in that** the mapping of applications traffic onto data flows is presented as a list of applications.

3. A telecommunications system, as claimed in any previous claim, **characterised in that** said QoSUI is adapted to enable a user to determine which data flows have resources bound to them.

4. A telecommunications system, as claimed in any previous claim, **characterised in that** said QoSUI is adapted to provide a user with information on costs associated with a specific application and total costs incurred by a current session.

5. A telecommunications system, as claimed in any previous claim, **characterised in that** said QoSUI is adapted to communicate with a client server's underlying structure to produce a list of data flows to which QoS resources can be bound, **in that** said QoSUI is adapted to enable a user to select a QoS to be applied to a data flow to which QoS resources can be bound and **in that** intelligent decisions are referred to a client software module.

6. A telecommunications system, as claimed in any of claims 1 to 4, **characterised in that** said QoSUI is adapted to communicate with a client server's underlying structure to produce a list of data flows to which QoS resources can be bound, **in that** said QoSUI is adapted to enable a user to select a QoS to be applied to a data flow to which QoS resources can be bound and **in that** intelligent decisions are referred to a user.

7. A telecommunications system, as claimed in any previous claim, **characterised in that** said QoSUI is adapted to present available data flows of a client server to a user as either a mapping to a corresponding application, or as a specific TCP/UDP flow, together with a current cost, bound resource and available resource status.

8. A telecommunications system, as claimed in any previous claim, **characterised in that** said QoSUI includes a graphical interface adapted to display at least some of the following information:

   - connection type;
   - remote host identity;
   - remote port ;
   - local port ;
   - allocated resource; and
   - remote IP.

9. A telecommunications system, as claimed in claim 8, **characterised in that** said graphical interface includes a soft button to enable a user to update information displayed by said graphical interface, **in that** softcontrols are provided to enable a user to adjust bandwidth requirements and **in that** said graphical interface is adapted to display a current connection status.

10. A telecommunications system, as claimed in claim 9, **characterised in that** said graphical interface is adapted to display a table listing information on current reservation status for a plurality of data flows each of which is associated with one, or more, applications.

11. A subscriber terminal, for use with a telecommunications system, as claimed in any of claims 1 to 10, said subscriber terminal having a QoSUI adapted to map applications traffic onto specified data flows and to present the mapping to a user via a graphical user interface, **characterised in that** said QoSUI is adapted to enable a user to select a desired data flow and set QoS parameters therefor, said QoS parameters including desired bandwidth and protocol specific parameters, that transmission means are provided adapted to transmit QoS parameters selected by a user to said transmission network, that said QoSUI is adapted to retrieve a user's control actions, that means are provided to translate said control actions into QoS parameters of the transmission network, and that means are provided to translate responses from said transmission network into user friendly messages addressed to a user.

12. A client server, for use with a telecommunications system, as claimed in any of claims 1 to 10, said client server having a QoSUI adapted to map applications traffic onto specified data flows and to present the mapping to a user via a graphical user interface, **characterised in that** said QoSUI is adapted to enable a user to select a desired data flow and set QoS parameters therefor, said QoS parameters including desired bandwidth and protocol specific parameters, that transmission means are provided adapted to transmit QoS parameters selected by a user to said transmission network, that said QoSUI is adapted to retrieve a user's control actions that means are provided to translate said control actions into QoS parameters of the transmission network, and that means are provided to translate responses from said transmission network into user friendly messages addressed to a user.

13. A subscriber terminal, or client server, as claimed in claim 11 or 12, **characterised in that** the mapping of applications traffic onto data flows is presented as a list of applications.

14. A subscriber terminal, or client server, as claimed in any of claims 11 to 13, **characterised in that** said QoSUI is adapted to enable a user to determine which data flows have resources bound to them.

15. A subscriber terminal, or client server, as claimed in any of claims 11 to 14, **characterised in that** said QoSUI is adapted to provide a user with information on costs associated with a specific application and total costs incurred by a current session.

16. A subscriber terminal, or client server, as claimed in any of claims 11 to 15, **characterised in that** said QoSUI is adapted to communicate with a client server's underlying structure to produce a list of data flows to which QoS resources can be bound, **in that** said QoSUI is adapted to enable a user to select a QoS to be applied to a data flow to which QoS resources can be bound and **in that** intelligent decisions are referred to a client software module.

17. A subscriber terminal, or client server, as claimed in any of claims 11 to 16, **characterised in that** said QoSUI is adapted to communicate with a client server's underlying structure to produce a list of data flows to which QoS resources can be bound, **in that** said QoSUI is adapted to enable a user to select a QoS to be applied to a data flow to which QoS resources can be bound and **in that** intelligent decisions are referred to a user.

18. A subscriber terminal, or client server, as claimed in any of claims 11 to 17, **characterised in that** said QoSUI is adapted to present available data flows of a client server to a user as either a mapping to a corresponding application, or as a specific TCP/UDP flow, together with a current cost, bound resource and available resource status.

19. A subscriber terminal, or client server, as claimed in any of claims 11 to 18, **characterised in that** said QoSUI includes a graphical interface adapted to display at least some of the following information:

- connection type;
- remote host identity;
- remote port;
- local port;
- allocated resource; and

- remote IP.

**20.** A subscriber terminal, or client server, as claimed in claim 19, **characterised in that** said graphical interface includes a soft button to enable a user to update information displayed by said graphical interface, **in that** soft-controls are provided to enable a user to adjust bandwidth requirements and **in that** said graphical interface is adapted to display a current connection status.

**21.** A subscriber terminal, or client server, as claimed in claim 20, **characterised in that** said graphical interface is adapted to display a table listing information on current reservation status for a plurality of data flows each of which is associated with one, or more, applications.

**22.** A method of operating a telecommunications system, adapted to operate as a platform for the provision of multimedia data services, in which a mapping of applications traffic onto specified data flows is presented to a user via a QoSUI and **characterised by** enabling a user to select a desired data flow and set QoS parameters therefor, by said QoS parameters including desired bandwidth and protocol specific parameters, by transmitting QoS parameters selected by a user to said transmission network, by said QoSUI retrieving a user's control actions, by translating said control actions into QoS parameters of the transmission network, and by translating responses from said transmission network into user friendly messages addressed to a user.

**23.** A method, as claimed in claim 22, **characterised by** mapping applications traffic onto data flows and presenting the mapping to a user as a list of applications.

**24.** A method, as claimed in 22 or 23, **characterised by** said QoSUI enabling a user to determine which data flows have resources bound to them.

**25.** A method, as claimed in any of claims 22 to 24, **characterised by** said QoSUI providing a user with information on costs associated with a specific application and total costs incurred by a current session.

**26.** A method, as claimed in any of claims 22 to 25, **characterised by** said QoSUI communicating with a client server's underlying structure to produce a list of data flows to which QoS resources can be bound, by said QoSUI enabling a user to select a QoS to be applied to a data flow to which QoS resources can be bound and by intelligent decisions being referred to a client software module.

**27.** A method, as claimed in any of claims 22 to 25, **characterised by** said QoSUI communicating with a client server's underlying structure to produce a list of data flows to which QoS resources can be bound, by said QoSUI enabling a user to select a QoS to be applied to a data flow to which QoS resources can be bound and by intelligent decisions being referred to a user.

**28.** A method, as claimed in any of claims 22 to 27, **characterised by** said QoSUI presenting available data flows of a client server to a user as either a mapping to a corresponding application, or as a specific TCP/UDP flow, together with a current cost, bound resource and available resource status.

**29.** A method, as claimed in any of claims 22 to 28, **characterised by** displaying at least some of the following information:

- connection type;
- remote host identity;
- remote port;
- local port;
- allocated resource; and
- remote IP.

**Patentansprüche**

**1.** Telekommunikationssystem, das dazu ausgebildet ist, als Plattform für die Bereitstellung von Multimediadatendiensten zu arbeiten und ein Übertragungsnetz einschließt, welches Telekommunikationssystem eine QoSUI (Quality of Service User Interface; Qualität des Dienstes-Benutzerschnittstelle) hat, die dazu ausgebildet ist, Anwendungsverkehr auf genau angegebene Datenflüsse abzubilden und die Abbildung einem Benutzer über eine grafische Benutzerschnittstelle darzubieten, **dadurch gekennzeichnet, dass** die QoSUI dazu ausgebildet ist, es einem Benutzer zu ermöglichen, einen gewünschten Datenfluss auszuwählen und QoS (Quality of Service; Qualität der Diensts) -Parameter dafür einzustellen, welche QoS-Parameter gewünschte Bandbreite und protokollspezifische Parameter einschließen, dass Übertragungsmittel vorgesehen sind, die dazu ausgebildet sind, QoS-Parameter, die durch einen Benutzer ausgewählt sind, zu dem Übertragungsnetz zu übertragen, dass die QoSUI dazu ausgebildet ist, die Steuer-Aktionen eines Benutzers abzurufen, dass Mittel vorgesehen sind, die Steuer-Aktionen in QoS-Parameter des Übertragungsnetzes zu übersetzen, und dass Mittel vorgesehen sind, Rückmeldungen von dem Übertragungsnetz in benutzerfreundliche Meldungen zu übersetzen, die an einen Benutzer adressiert sind.

2. nach Anspruch 1, **dadurch gekennzeichnet, dass** die Abbildung von Anwendungsverkehr auf Datenflüsse als eine Liste von Anwendungen dargeboten wird.

3. Telekommunikationssystem an einem vorangehenden Anspruch, **dadurch gekennzeichnet, dass** die QoSUI dazu ausgebildet ist, es einem Benutzer zu ermöglichen wird, zu bestimmen, an welchen Datenfluss Ressourcen gebunden sind.

4. Telekommunikationssystem nach einem vorangehenden Anspruch, **dadurch gekennzeichnet**, das die QoSUI dazu ausgebildet ist, einen Benutzer mit Information über Kosten, die mit einer besonderen Anwendung verknüpft sind, und Gesamtkosten, die durch eine laufende Sitzung erzeugt werden, zu informieren.

5. Telekommunikationssystem nach einem vorangehenden Anspruch, **dadurch gekennzeichnet, dass** die QoSUI dazu ausgebildet ist, mit einer einem Klientenserver zu Grunde liegenden Struktur zu kommunizieren, um eine Liste von Datenflüssen zu erzeugen, an die QoS-Ressourcen gebunden werden können, dass die QoSUI dazu ausgebildet ist, es einem Benutzer zu ermöglichen, eine QoS auszuwählen, die auf einen Datenfluss angewendet werden soll, an den QoS-Ressourcen gebunden werden können, und dass intelligente Entscheidungen zu einem Klienten-Softwaremodul übergeben werden.

6. Telekommunikationssystem nach einem der Ansprüche 1 bis 4, **dadurch gekennzeichnet**, dazu die QoSUT dazu ausgebildet ist, mit einer einem Klienten zu Grunde liegenden Struktur zu kommunizieren, um eine Liste von Datenflüssen zu erzeugen, an die QoS-Ressourcen gebunden werden, können, dass die QoSUI dazu ausgebildet ist, es einem Benutzer zu ermöglichen, eine QoS auszuwählen, die auf einen Datenfluss angewendet werden soll, an den QoS-Ressourcen gebunden werden können, und dass intelligente Entscheidungen einem Benutzer übergeben werden.

7. Telekommunikationssystem nach einem vorangehenden Anspruch, **dadurch gekennzeichnet, dass** die QoSUI dazu ausgebildet ist, zur Verfügung stehende Datenflüsse eines Klientenservers einem Benutzer entweder als eine Abbildung zu einer entsprechenden Anwendung oder als einen genau angegebene TCP/UDP-Fluss zusammen mit einem gegenwärtigen Status über Kosten, gebundene Ressource und zur Verfügung stehende Ressource darzubieten.

8. Telekommunikationssystem nach einem vorangehenden Anspruch, **dadurch gekennzeichnet, dass** die QoSUI eine grafische Schnittstelle einschließt, die dazu ausgebildet ist, wenigstens einiges der folgenden Information anzuzeigen:

- Verbindungstyp;
- Identität des entfernten Hosts;
- entfernter Anschluss;
- lokaler Anschluss ;
- zugeteilte Ressource ; und
- entfernte IP.

9. Telekommunikationssystem nach Anspruch 8, **dadurch gekennzeichnet, dass** die grafische Schnittstelle einen Soft Button (Weiche Taste) aufweist, um es einem Benutzer zu ermöglichen, Information zu aktualisieren, die durch die grafische Schnittstelle angezeigt wird, dass Soft Controls (weiche Steuerungen) vorgesehen sind, um es einem Benutzer zu erlauben, Bandbreiteanforderungen einzustellen, und dass die grafische Schnittstelle dazu ausgebildet ist, einen gegenwärtigen Verbindungszustand anzuzeigen.

10. Telekommunikationssystem nach Anspruch 9, **dadurch gekennzeichnet, dass** die grafische Schnittstelle dazu ausgebildet ist, eine Tabelle anzuzeigen, die Information über gegenwärtigen Reservierungszustand für eine Mehrzahl von Datenflüssen auflistet, von denen jeder mit einer oder mehreren Anwendungen verknüpft ist.

**11.** Teilnehmerendgerät für Benutzung mit einem Telekommunikationssystem nach einem der Ansprüche 1 bis 10, welches Teilnehmerendgerät eine QoSUI hat, die dazu ausgebildet ist, Anwendungsverkehr auf genau angegebene Datenflüsse abzubilden und die Abbildung einem Benutzer über eine grafische Schnittstelle darzubieten, **dadurch gekennzeichnet, dass** die QoSUI dazu ausgebildet ist, es einem Benutzer zu ermöglichen, einen gewünschten Datenfluss auszuwählen und QoS-Parameter dafür einzustellen, welche QoS-Parameter gewünschte Bandbreite und protokollspezifische Parameter einschließen, dass Übertragungsmittel vorgesehen sind, die dazu ausgebildet sind, QoS-Parameter, die durch einen Benutzer ausgewählt sind, zum Übertragungsnetz zu übertragen, dass die QoSUI dazu ausgebildet ist, die Steuer-Aktionen eines Benutzers abzurufen, dass Mittel vorgesehen sind, die Steuer-Aktionen in QoS-Parameter des Übertragungsnetzes Zu übersetzen, und dass Mittel vorgesehen sind, um Rückmeldungen von dem Übertragungsnetz in benutzerfreundliche Meldungen zu übersetzen, die an einen Benutzer adressiert sind.

**12.** Klientenserver für Benutzung mit einem Telekommunikationssystem nach einem der Ansprüche 1 bis 10, welcher Klientenserver eine QoSUI hat, die dazu ausgebildet ist, Anwendungsverkehr auf genau angegebene Datenflüsse abzubilden und die Abbildung einen Benutzer über eine grafische Benutzerschnittstelle darzubieten, **dadurch gekennzeichnet, dass** die QoSUI dazu ausgebildet ist, es einem Benutzer zu ermöglichen, einen gewünschten Datenfluss auszuwählen und QoS-Parameter dafür einzustellen, welche QoS-Parameter gewünschte Bandbreite und protokollspezifische Parameter einschließen, dass Übertragungsmittel vorgesehen sind, die dazu ausgebildet sind, QoS-Parameter, die durch einen Benutzer ausgewählt sind, zum Übertragungsnetz zu übertragen, dass die QoSUI dazu ausgebildet ist, die Steuer-Aktionen eines Benutzers abzurufen, dass Mittel vorgesehen sind, die Steuer-Aktionen in QoS-Parameter des Übertragungsnetzes zu übersetzen, und dass Mittel vorgesehen sind, um Rückmeldungen von dem Übertragungsnetz in benutzerfreundliche Meldungen zu übersetzen, die an einen Benutzer adressiert sind.

**13.** Teilnehmerendgerät oder Klientenserver nach Anspruch 11 oder 12, **dadurch gekennzeichnet**, das die Abbildung von Anwendungsverkehr auf Datenflüsse als eine Liste von Anwendungen dargeboten wird.

**14.** Teilnehmerendgerät oder Klientenserver nach einem der Ansprüche 11 bis 13, **dadurch gekennzeichnet, dass** die QoSUI dazu ausgebildet ist, es einem Benutzer zu ermöglichen, zu bestimmen, welche Datenflüsse daran gebundene Ressourcen haben.

**15.** Teilnehmerendgerät oder Klientenserver nach einem der Ansprüche 11 bis 14, **dadurch gekennzeichnet, dass** die QoSUI dazu ausgebildet ist, einen Benutzer mit Information, über Kosten, die mit der besonderen Anwendung verknüpft sind, und über Gesamtkosten, die durch eine laufende Sitzung verursacht werden, zu versorgen.

**16.** Teilnehmerendgerät oder Klientenserver nach einem der Ansprüche 11 bis 15, **dadurch gekennzeichnet, dass** die QoSUI dazu ausgebildet ist, mit einer einem Klientenserver zu Grunde liegenden Struktur zu kommunizieren, um eine Liste von Datenflüssen zu erzeugen, an die QoS-Ressourcen gebunden werden können, dass die QoSUI dazu ausgebildet ist, es einem Benutzer zu ermöglichen, eine QoS auszuwählen, die auf einen Datenfluss angewendet werden soll, an den QoS-Ressourcen, gebunden werden können, und dass intelligente Entscheidungen zu einem Klientensoftwaremodul übergeben werden.

**17.** Teilnehmerendgerät oder Klientenserver nach einem der Ansprüche 11 bis 16, **dadurch gekennzeichnet**, das die QoSUI dazu ausgebildet ist, mit einer einem Klientenserver zu Grunde liegenden Struktur zu kommunizieren, um eine Liste von Datenflüssen zu erzeugen, an die QoS-Ressourcen gebunden werden können, dass die QoSUI dazu ausgebildet ist, es einem Benutzer zu ermöglichen, eine QoS auszuwählen, die auf einen Datenfluss angewendet werden soll, an den QoS-Ressourcen gebunden werden können, und dass intelligente Entscheidungen zu einem Benutzer übergeben werden.

**18.** Teilnehmerendgerät oder Klientenserver nach einem der Ansprüche 11 bis 17, **dadurch gekennzeichnet**, das die QoSUI dazu ausgebildet ist, zur Verfügung stehende Datenflüsse eines Klientenserver einen Benutzer entweder als Abbildung auf eine entsprechende Anwendung oder als einen besonderen TCP/UDP-Fluss zusammen mit einem gegenwärtigen Status über Kosten, gebundene Ressource und zur Verfügung stehende Ressource darzubieten.

**19.** oder Klientenserver nach einem der Ansprüche 11 bis 18, **dadurch gekennzeichnet, dass** die QoSUI eine grafische Schnittstelle einschließt, die dazu ausgebildet ist, wenigstens einiges der folgenden Information anzuzeigen:

- Verbindungstyp ;
- Identität des entfernten Hosts ;
- entfernter Anschluss ;
- lokaler Anschlusse ;
- zugeteilte Ressource ; und
- entfernte IP.

**20.** Teilnehmerendgerät oder Klientenserver nach Anspruch 19, **dadurch gekennzeichnet, dass** die grafische Schnittstelle einen Soft Button (Weiche Taste) aufweist, um es einem Benutzer zu ermöglichen, Information zu aktualisieren, die durch die grafische Schnittstelle angezeigt wird, dass Soft Controls (weiche Steuerungen) vorgesehen sind, um es einem Benutzer zu erlauben, Bandbreiteanforderungen einzustellen, und dass die grafische Schnittstelle dazu ausgebildet ist, einen gegenwärtigen Verbindungszustand anzuzeigen.

**21.** Teilnehmerendgerät oder Klientenserver nach Anspruch 20, **dadurch gekennzeichnet, dass** die grafische Schnittstelle dazu ausgebildet ist, eine Tabelle anzuzeigen, die Information über gegenwärtigen Reservierungszustand für eine Mehrzahl von Datenflüssen auflistet, von denen jeder mit einer oder mehreren Anwendungen verknüpft ist.

**22.** Verfahren zum Betreiben eines Telekommunikationssystems, das dazu ausgebildet ist, als Plattform für die Bereitstellung von Multimediadatendiensten zu arbeiten, bei dem eine Abbildung von Anwendungsverkehr auf genau angegebene Datenflüsse einem Benutzer über eine QoSUI dargeboten wird, **dadurch gekennzeichnet, dass** es einem Benutzer ermöglicht wird, einen gewünschten Datenfluss auszuwählen und QoS-Parameter dafür einzustellen, welche QoS-Parameter gewünschte Bandbreite und protokollspezifische Parameter einschließen, dass QoS-Parameter, die durch einen Benutzer ausgewählt sind, zu dem Übertragungsnetz übertragen werden, dass die QoSUI Steuer-Aktionen eines Benutzers abruft, dass die Steuer-Aktionen in QoS-Parameter des Netzes übersetzt werden, und dass Rückmeldungen von dem Übertragungsnetz in benutzerfreundliche Meldungen übersetzt werden, die an einen Benutzer adressiert sind.

**23.** Verfahren nach Anspruch 22, **gekennzeichnet durch** Abbilden von Anwendungsverkehr auf Datenflüsse und Darbieten der Abbildung an einen Benutzer als Liste von Anwendungen.

**24.** Verfahren nach Anspruch 22 oder 23, **dadurch gekennzeichnet, dass** die QoSUI es einem Benutzer ermöglicht, zu bestimmen, an welche Datenflüsse Ressourcen gebunden sind.

**25.** Verfahren nach einem der Ansprüche 22 bis 24, **dadurch gekennzeichnet**, das die QoSUI einen Benutzer mit Information über Kosten, die mit einer besonderen Anwendung verknüpft sind, und über Gesamtkosten, die durch eine gegenwärtige Sitzung verursacht werden, versorgt.

**26.** Verfahren nach einem der Ansprüche 22 bis 25, **dadurch gekennzeichnet, dass** die QoSUI mit einer einem Klientenserver zu Grunde liegenden Struktur kommuniziert, um eine Liste von Datenflüssen zu erzeugen, an die QoS-Ressourcen gebunden werden können, dass die QoSUI es einem Benutzer ermöglicht, eine QoS auszuwählen, die auf einen Datenfluss angewendet werden soll, an den QoS-Ressourcen gebunden werden können, und dass intelligente Entscheidungen zu einem Klientensoftwaremodul übergeben werden.

**27.** Verfahren nach einem der Ansprüche 22 bis 25, **dadurch gekennzeichnet, dass** die QoSUI mit einer einem Klientenserver zu Grunde liegenden Struktur kommuniziert, um eine Liste von Datenflüssen zu erzeugen, an die QoS-Ressourcen gebunden werden, können, dass die QoSUI es einem Benutzer ermöglicht, eine QoS auszuwählen, die auf einen Datenfluss angewendet werden soll, an den QoS-Ressourcen gebunden werden können, und dass intelligente Entscheidungen zu einem Benutzer übergeben werden.

**28.** Verfahren nach einem der Ansprüche 22 bis 27, **dadurch gekennzeichnet, dass** die QoSUI zur Verfügung stehende Datenflüsse eines Klientenserver einem Benutzer entweder als Abbildung auf eine entsprechende Anwendung oder als einen besonderen TCP/UDP-Fluss zusammen mit einem gegenwärtigen Status über Kosten, gebundene Ressource und zur Verfügung stehende Ressourcen darbietet.

**29.** Verfahren nach einem der Ansprüche 22 bis 28, **dadurch gekennzeichnet, dass** wenigstens einiges der folgenden Information angezeigt wird:

- Verbindungstyp;
- Identität des entfernten Hosts;
- entfernter Anschluss;
- lokaler Anschluss;
- zugeteilte Ressource; und
- entfernte IP.

**Revendications**

1. Système de télécommunications, conçu pour fonctionner comme une plate-forme de prestations de services de données multimédia, et comprenant un réseau de transmission, ledit système de télécommunication comprenant une interface utilisateur de qualité de services (QoSUI) conçue pour mapper le trafic d'applications sur les flux de données spécifiés et pour présenter le mappage à un utilisateur via une interface utilisateur graphique, **caractérisé en ce que** ledit QoSUI est conçu pour permettre à un utilisateur de sélectionner un flux de données souhaité et d'établir les paramètres de QoS pour celui-ci, lesdits paramètres de QoS comprenant une largeur de bande souhaitée et des paramètres spécifiques de protocole, **en ce que** les moyens de transmission sont conçus pour transmettre les paramètres de QoS sélectionnés par un utilisateur audit réseau de transmission, **en ce que** ledit QoSUI est conçu pour récupérer les actions de commande d'un utilisateur, **en ce que** les moyens sont conçus pour traduire lesdites actions de commande en paramètres de QoS du réseau de transmission, et **en ce que** les moyens sont conçus pour traduire les réponses dudit réseau de transmission en messages conviviaux adressés à un utilisateur.

2. Système de télécommunications, selon la revendication 1, **caractérisé en ce que** le mappage du trafic d'applications sur les flux de données est présenté sous la forme d'une liste d'applications.

3. Système de télécommunications, selon l'une quelconque des revendications précédentes, **caractérisé en ce que** ledit QoSUI est conçu pour permettre à un utilisateur de déterminer quels flux de données comprennent des ressources liées à ceux-ci.

4. Système de télécommunications, selon l'une quelconque des revendications précédentes, **caractérisé en ce que** ledit QoSUI est conçu pour fournir à l'utilisateur des informations sur les coûts associés à une application déterminée et sur les coûts globaux d'une séance en cours.

5. Système de télécommunications, selon l'une quelconque des revendications précédentes, **caractérisé en ce que** ledit QoSUI est conçu pour communiquer avec une structure sous-jacente de client/serveur pour produire une liste de flux de données auxquels les ressources de QoS peuvent être liées, **en ce que** ledit QoSUI est conçu pour permettre à un utilisateur de choisir un QoS devant être appliqué à un flux de données auquel les ressources de QoS peuvent être liées et **en ce que** les décisions intelligentes se réfèrent à un module logiciel client.

6. Système de télécommunications, selon l'une quelconque des revendications 1 à 4, **caractérisé en ce que** ledit QoSUI est conçu pour communiquer avec une structure sous-jacente de client/serveur pour produire une liste de flux de données auxquels les ressources de QoS peuvent être liées, **en ce que** ledit QoSUI est conçu pour permettre à un utilisateur de sélectionner un QoS devant être appliqué à un flux de données auquel les ressources de QoS peuvent être liées et **en ce que** les décisions intelligentes se réfèrent à un utilisateur.

7. Système de télécommunications, selon l'une quelconque des revendications précédentes **caractérisé en ce que** ledit QoSUI est conçu pour présenter des flux de données disponibles d'un client/serveur à un utilisateur soit en tant que mappage d'une application correspondante, ou en tant que flux TCP/UDP spécifique, conjointement avec un coût actuel, un état de ressource liée et de ressource disponible.

8. Système de télécommunications, selon l'une quelconque des revendications précédentes, **caractérisé en ce que** ledit QoSUI comprend une interface graphique conçue pour afficher au moins certaines des informations suivantes :

   - type de connexion ;
   - identité hôte distante ;
   - port distant ;
   - port local ;
   - ressource allouée ; et

- IP distant.

**9.** Système de télécommunications, selon la revendication 8, **caractérisé en ce que** ladite interface graphique comprend une touche logicielle permettant à un utilisateur de mettre à jour les informations affichées par ladite interface graphique, **en ce que** les commandes logicielles sont conçues pour permettre à un utilisateur d'ajuster les exigences de largeur de bande et **en ce que** ladite interface graphique est conçue pour afficher un état de connexion actuel.

**10.** Système de télécommunications, selon la revendication 9, **caractérisé en ce que** ladite interface graphique est conçue pour afficher des informations de listes tableaux sur l'état de réservation actuel pour une pluralité de flux de données, chacun étant associé à une ou plusieurs applications.

**11.** Terminal d'abonné, pour utilisation avec un système de télécommunications, selon l'une quelconque des revendications 1 à 10, ledit terminal d'abonné comprenant un QoSUI conçu pour mapper le trafic d'applications sur les flux de données spécifiés et pour présenter le mappage à un utilisateur via une interface utilisateur graphique, **caractérisé en ce que** ledit QoSUI est conçu pour permettre à un utilisateur de sélectionner un flux de données souhaité et d'établir les paramètres de QoS pour celui-ci, lesdits paramètres de QoS comprenant une largeur de bande souhaitée et des paramètres spécifiques de protocole, **en ce que** les moyens de transmission sont conçus pour transmettre les paramètres de QoS sélectionnés par un utilisateur audit réseau de transmission, **en ce que** ledit QoSUI est conçu pour récupérer les actions de commande d'un utilisateur, **en ce que** les moyens sont conçus pour traduire lesdites actions de commande en paramètres de QoS du réseau de transmission, et **en ce que** les moyens sont conçus pour traduire les réponses dudit réseau de transmission en messages conviviaux adressés à un utilisateur.

**12.** Client/serveur, pour utilisation avec un système de télécommunications, selon l'une quelconque des revendications 1 à 10, ledit client/serveur comprenant un QoSUI conçu pour mapper le trafic d'applications sur les flux de données spécifiés et pour présenter le mappage à un utilisateur via une interface utilisateur graphique, **caractérisé en ce que** ledit QoSUI est conçu pour permettre à un utilisateur de sélectionner un flux de données souhaité et d'établir les paramètres de QoS pour celui-ci, **en ce que** lesdits paramètres de QoS comprennent une largeur de bande souhaitée et des paramètres spécifiques de protocole, **en ce que** les moyens de transmission prévus sont conçus pour transmettre les paramètres de QoS sélectionnés par un utilisateur audit réseau de transmission, **en ce que** ledit QoSUI est conçu pour récupérer les actions de commande d'un utilisateur, **en ce que** les moyens sont conçus pour traduire lesdites actions de commande en paramètres de QoS du réseau de transmission, et **en ce que** les moyens sont conçus pour traduire les réponses dudit réseau de transmission en messages conviviaux adressés à un utilisateur.

**13.** Terminal d'abonné, ou client/serveur, selon la revendication 11 ou 12, **caractérisé en ce que** le mappage du trafic d'applications sur les flux de données est présenté sous la forme de liste d'applications.

**14.** Terminal d'abonné, ou client/serveur, selon l'une quelconque des revendications 11 à 13, **caractérisé en ce que** ledit QoSUI est conçu pour permettre à un utilisateur de déterminer quels flux de données comportent des ressources liées à ceux-ci.

**15.** Terminal d'abonné, ou client/serveur selon l'une quelconque des revendications 11 à 14, **caractérisé en ce que** ledit QoSUI est conçu pour fournir à un utilisateur des informations sur les coûts associés à une application déterminée et sur les coûts globaux d'une séance en cours.

**16.** Terminal d'abonné, ou client/serveur, selon l'une quelconque des revendications 11 à 15, **caractérisé en ce que** ledit QoSUI est conçu pour communiquer avec une structure sous-jacente de client/serveur pour produire une liste de flux de données auxquels les ressources de QoS peuvent être liées, **en ce que** ledit QoSUI est conçu pour permettre à un utilisateur de choisir un QoS devant être appliqué à un flux de données auquel les ressources de QoS peuvent être liées et **en ce que** les décisions intelligentes se réfèrent à un module logiciel client.

**17.** Terminal d'abonné, ou client/serveur, selon l'une quelconque des revendications 11 à 16, **caractérisé en ce que** ledit QoSUI est conçu pour communiquer avec une structure sous-jacente de client/serveur pour produire une liste de flux de données auxquels les ressources de QoS peuvent être liées, **en ce que** ledit QoSUI est conçu pour permettre à un utilisateur de sélectionner un QoS devant être appliqué à un flux de données auquel les ressources de QoS peuvent être liées et **en ce que** les décisions intelligentes se réfèrent à un utilisateur.

**18.** Terminal d'abonné, ou client/serveur, selon l'une quelconque des revendications 11 à 17, **caractérisé en ce que** ledit QoSUI est conçu pour présenter les flux de données disponibles d'un client/serveur à un utilisateur soit en tant que mappage d'une application correspondante, ou en tant que flux TCP/UDP spécifique, conjointement avec un coût actuel, état de ressource liée et de ressource disponible.

**19.** Terminal d'abonné, ou client/serveur, selon l'une quelconque des revendications 11 à 18, **caractérisé en ce que** ledit QoSUI comprend une interface graphique conçue pour afficher au moins certaines des informations suivantes :

- type de connexion ;
- identité hôte distante ;
- port distant ;
- port local ;
- ressource allouée ; et
- IP distant.

**20.** Terminal d'abonnée ou client/serveur, selon la revendication 19, **caractérisé en ce que** ladite interface graphique comprend une touche logicielle permettant à un utilisateur de mettre à jour les informations affichées par ladite interface graphique, **en ce que** les commandes logicielles sont conçues pour permettre à un utilisateur d'ajuster les exigences de largeur de bande et **en ce que** ladite interface graphique est conçue pour afficher un état de connexion actuel.

**21.** Terminal d'abonné, ou client/serveur, selon la revendication 20, **caractérisé en ce que** ladite interface graphique est conçue pour afficher des informations de listes tableaux sur l'état de réservation actuel pour une pluralité de flux de données, chacun étant associé à une ou plusieurs applications.

**22.** Procédé pour faire fonctionner un système de télécommunications, conçu pour fonctionner comme une plate-ferme de prestations de services de données multimédia dans lequel un mappage du trafic d'applications sur des flux de données spécifiés est présenté à un utilisateur via un QoSUI et **caractérisé par** le fait de permettre à un utilisateur de sélectionner un flux de données souhaité et d'établir les paramètres de QoS pour celui-ci, lesdits paramètres de QoS comprenant une largeur de bande souhaitée et des paramètres spécifiques de protocole, par le fait de transmettre les paramètres de QoS sélectionnés par un utilisateur audit réseau de transmission, par le fait que ledit QoSUI récupère les actions de commande d'un utilisateur, par la traduction desdites actions de commande en paramètres de QoS du réseau de transmission, et par la traduction des réponses dudit réseau de transmission en messages conviviaux adressés à un utilisateur.

**23.** Procédé, selon la revendication 22,
**caractérisé par** le mappage de trafic d'applications sur les flux de données et par la présentation du mappage à un utilisateur sous forme de liste d'applications.

**24.** Procédé, selon la revendication 22 ou 23, **caractérisé en ce que** ledit QoSUI permet à un utilisateur de déterminer quels flux de données comprennent des ressources liées à ceux-ci.

**25.** Procédé selon l'une quelconque des revendications 22 à 24, **caractérisé en ce que** ledit QoSUI fournit à un utilisateur des informations sur les coûts associés à une application déterminée et sur les coûts globaux d'une séance en cours.

**26.** Procédé, selon l'une quelconque des revendications 22 à 25, **caractérisé en ce que** ledit QoSUI communique avec une structure sous-jacente de client/serveur pour produire une liste de flux de données auxquels les ressources de QoS peuvent être liées, **en ce que** ledit QoSUI permet à un utilisateur de choisir un QoS devant être appliqué à un flux de données auquel les ressources de QoS peuvent être liées et par des décisions intelligentes se référant à un module logiciel client.

**27.** Procédé, selon l'une quelconque des revendications 22 à 25, **caractérisé en ce que** ledit QoSUI communique avec une structure sous-jacente de client/serveur pour produire une liste de flux de données auxquels les ressources de QoS peuvent être liées, **en ce que** ledit QoSUI permet à un utilisateur de sélectionner un QoS devant être appliqué à un flux de données auquel les ressources de QoS peuvent être liées et par des décisions intelligentes se référant à un utilisateur.

**28.** Procédé, selon l'une quelconque des revendications 22 à 27, **caractérisé en ce que** ledit QoSUI présente des flux de données disponibles d'un client/serveur à un utilisateur soit en tant que mappage d'une application correspondante, ou en tant que flux TCP/UDP spécifique, conjointement avec un coût actuel, état de ressource liée et de ressource disponible.

29. Procédé, selon l'une quelconque des revendications 22 à 28, **caractérisé par** l'affichage d'au moins certaines des informations suivantes :

- type de connexion ;
- identité hôte distante ;
- port distant ;
- port local ;
- ressource allouée ; et
- IP distant.

**FIGURE 1**

EP 1 195 075 B1

## IRRIG  ▭ ▭ X

### Active connections

| Connection type | Remote host | Remote port | Local port | Alloceted(f) | Allocated(r) | Remote IP |
|---|---|---|---|---|---|---|
| UPD | 10.47.11.2 | 0 | 138 | 0 | 0 | 10.47.11.2 |
| UPD | 10.47.11.2 | 0 | 137 | 0 | 0 | 10.47.11.2 |
| TCP | 131.115.158.234 | 20 | 1114 | 500 | 4000 | 131.115.158 |

Current Selection:  TCP connection to 131.115.158.234:20(:R:500/400

[Update]

### Bandwidth allocator

Incomming traffic:          4000kbps

Outgoing traffic          500 kbps

[ ] Round values   [Clear] [Allocate]

### Status

107:500(kbps) fwd, 4000(kbps) rev resered
108: New hour price is: 27000 (cr/h)
109: connection cost so far: 96
110: 500(kbps) fwd, 4000(kbps)rev reserved
111: New hour price is: 13500(cr/h)
112: connection cost so far: 968

[OK]

[Cancel]

[Help]

## Figure 2

EP 1 195 075 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JÉRÕME TASSEL et al.** An End to End Price-Based QoS Control Component Using Reflective Java. *4th COST 237 WORKSHOP,* December 1997, 18-32
- **ERRIN W. PULP et al.** Paying for QoS: An Optimal Distributed Algorithm for Pricing Network Resources. *THE PROCEEDINGS OF THE IWQoS 98 WORK-SHOP,* May 1998, 75-84

- **GABRIEL DERMLER et al.** A Negotiation and Resource Reservation Protocol (NRP) for Configurable Multimedia Applications. *IEEE PROCEEDINGS OF MULTIMEDIA '96,* 1996, 113-115